# EUROPÄISCHE PATENTANMELDUNG

(11) **EP 1 211 432 A1**
(43) Veröffentlichungstag der Anmeldung: **05.06.2002**
(21) Anmeldenummer: 00125314.5
(22) Anmeldetag: 29.11.2000
(51) Int. Cl.: F16D 65/092, F16D 55/14

(54) **Scheibenbremse**

(71) Anmelder: Spägele, Gerhard, Dipl.-Ing., 6380 St. Johann / Tirol (AT)
(72) Erfinder: Spägele, Gerhard, Dipl.-Ing., 6380 St. Johann / Tirol (AT)
(74) Vertreter: Beetz & Partner Patentanwälte

(57) **Zusammenfassung**

Gegenstand der Erfindung ist eine Teilbelag-Scheibenbremse mit Selbstverstärkung der Bremskraft, bestehend aus einer drehbaren Bremsscheibe (20), einem U-förmigen ortsfesten Sattel (21), der die Bremsscheibe außen umgreift, im Sattel angeordneten Bremsbacken (2; 22), deren mit einem Bremsbelag (23) verbundene Tragplatten (24) in einer Lageranordnung (28, 29) schwenkbar gelagert sind, und an den Schenkeln des Sattels (21) angeordnete Betätigungseinrichtungen (27) zum synchronen Verschieben und Andrücken der Bremsbacken an die Stirnflächen der Bremsscheibe, wobei in der Vorschubbahn der Bremsbacken (2; 22) Schrägflächen zur selbsttätigen Verstärkung des Andruckes der Bremsbacken an die Bremsscheibe vorgesehen sind. Zur Erzielung eines gezielten Selbstverstärkungseffekts der Bremswirkung mit technisch einfachen Mitteln ist der radiale Abstand der Lageranordnung zur Bremsscheibenachse (19) größer als der radiale Abstand der Kraftangriffs-Schwerpunkte (6) der Bremsbacken (2; 22) zur Bremsscheibenachse (19) begrenzt frei beweglich, so daß die Bremsbacken bei ihrem Andruck an die Bremsscheibe (1) eine zum Bremsscheibenumfang hin gerichtete Bewegung ausführen, wobei die in der Vorschubbahn der Bremsbacken (22) vorgesehenen Schrägflächen radial verlaufen und die zum Bremsscheibenumfang hin gerichteten Kräfte durch Keilwirkung in zusätzliche Andruckkräfte umsetzen.

## Beschreibung

Die Erfindung betrifft eine Scheibenbremse mit Selbstverstärkung der Bremswirkung der im Oberbegriff des Patentanspruchs 1 angegebenen Gattung insbesondere für Bremssysteme von Fahrzeugen und anderen technischen Aggregaten.

Bei den insbesondere in Fahrzeugen üblicherweise verwendeten Scheibenbremsen wird die Bremskraft zwischen der rotierenden Bremsscheibe und den im Sattel untergebrachten Bremsbacken durch hydraulische, elektrische oder pneumatische Mittel erzeugt, deren Druck auf mindestens einen in der Seitenwand des ortsfesten Sattels installierten Kolben einwirkt. Durch die daraus folgende Kolbenbewegung wird die mit ihm direkt oder indirekt verbundene Bremsbacke mit ihrem Reibbelag gegen die mit der Radachse rotierende Bremsscheibe achsparallel angedrückt. In den sog. Schwimmsattel-Scheibenbremsen erfolgt der gleichzeitige Andruck von zwei Bremsbacken bzw. Bremsklötzen gegen die beiden planparallelen Stirnseiten der jeweiligen Bremsscheibe. Um die notwendigen hohen Bremskräfte zu erreichen, müssen die hydraulischen Kolben-Zylindereinheiten und deren Hauptzylinder relativ große Abmessungen haben, was Montageraum erfordert und entsprechend große Betätigungskräfte am Bremspedal verlangt. Verschiedenartige Systeme von mit Hilfsenergie betriebenen Bremskraftverstärkern bewirken eine automatische Erhöhung der Anpreßkräfte der Bremsbacken bei vergleichsweise geringeren Pedal-Betätigungskräften und ermöglichen die Verwendung kleinerer hydraulischer Baugruppen. Diese Bremskraft-Verstärker-Systeme sind jedoch technisch aufwendig und teuer.

Es sind auch bereits verschiedenartige Scheibenbremsen mit integrierter Bremskraftverstärkung bekanntgeworden, die jedoch keinen Eingang in die Praxis, insbesondere in den Kraftfahrzeugbau, gefunden haben, weil sie offensichtlich die komplexen Anforderungen im langjährigen Fahrbetrieb nicht voll erfüllen.

So ist in der DE-AS 1 284 731 eine Teilbelag-Scheibenbremse beschrieben, deren Sattel mit einem verlängerten Schenkel auf einem fahrzeugfesten Zapfen axial beweglich gelagert ist. Der Kolben des in einem Sattelschenkel eingebauten hydraulischen Zylinders ist mit einem schwenkbaren Druckteil versehen, der an einer Trägerplatte der einen Bremsbacke angreift und gewisse Bewegungen der angedrückten Bremsbacke in Umfangsrichtung der Bremsscheibe zuläßt. Diese schwenkbare und axial bewegliche Trägerplatte aus gehärtetem Stahl hat eine sägezahnartig gewellte Kontur, wobei sich die Höhen und Täler der Wellung in radialer Richtung erstrecken. Ein am Sattelschenkel befestigtes Stahlglied hat eine daran angepaßte wellenartige Kontur und steht mit der Trägerplatte in formschlüssigem Eingriff. Beim Betätigen des hydraulischen Zylinders wird die schwenkbar gelagerte Trägerplatte durch den Reibangriff des Bremsbelages an der Bremsscheibe um einen geringen Betrag in Umfangsrichtung bewegt. Die dadurch gegeneinander verschobenen Wellungen bewirken einen Keileffekt und damit einen erhöhten Andruck der Bremsbacken, d.h. eine vergrößerte Bremswirkung. Eine gezielte Beeinflussung dieses Bremskraft-Verstärkungseffektes ist nicht möglich und es können Probleme insbesondere im Langzeitbetrieb durch Anbackungen und Verschmutzungen der beiden Wellungen auftreten. Ferner ist ein erheblicher Herstellungsaufwand für derartige Scheibenbremsen erforderlich.

Zur Erzielung einer Selbstverstärkung bei einer Scheibenbremse wird in der DE-AS 1 019 873 vorgeschlagen, die in den Sattelschenkeln befindlichen Bremsbackenführungen unter einem Winkel von größer oder kleiner 90° zu den planparallelen Bremsscheibenflächen anzuordnen und die jeweiligen Bremsbacken in der Führung des Sattels mittels Wälzkörpern zu lagern. Die Größe des Selbstverstärkungseffektes ändert sich selbsttätig durch die schwenkbare Ausbildung einer Schwenkschuhführung.

Gemäß der DE-A 2 837 634 kann eine Selbstverstärkung bei einer Scheibenbremse auch dadurch erzielt werden, daß in der Bremsscheibe eine in Umfangsrichtung verlaufende Ringnut eingearbeitet ist, deren Flanken unter bestimmten Winkeln zur Scheibenfläche geneigt sind. In diese Ringnut wird ein entsprechend keilförmig geformter Ansatz an der zugehörigen Bremsbacke eingedrückt, wobei durch das Zusammenwirken der geneigten Flächenpaarung eine nach radial innen wirkende Kraft erzeugt wird.

In den JP 2-102933 A und JP 56-693 A sind Scheibenbremsen beschrieben, deren Bremsscheiben konisch mit nach radial außen zunehmender Wandstärke ausgebildet sind. Die in herkömmlichen Sätteln hydraulisch bewegbaren Bremsbacken können nur Axialbewegungen in Richtung der Bremsscheibenachse ausführen und die Form der Bremsbeläge ist der konischen Kontur der Bremsscheibe angepaßt. Diese Bremsscheiben haben keine Selbstverstärkung der Bremswirkung.

Aufgabe der Erfindung ist es, eine Scheibenbremse mit Selbstverstärkung der Bremswirkung zu schaffen, die gegenüber bekannten Ausführungen konstruktiv besonders einfach aufgebaut ist und bei der auch für den Langzeitbetrieb eine betriebssichere und effektive Selbstverstärkungswirkung erzielt wird.

Diese Aufgabe wird durch die im Patentanspruch 1 angegebenen Merkmale gelöst.

Da beim Erfindungsgegenstand der Abstand zwischen der Lageranordnung der Bremsbacken und der Bremsscheibenachse größer als der Abstand zwischen dem Kraftangriffs-Schwerpunkt der jeweiligen Bremsbacke und der Bremsscheibenachse ist, sich also die Lageranordnung radial außerhalb der Kraftangriffs-Schwerpunkte befindet, werden die Bremsbacken durch den Reibungsangriff ihrer Bremsbeläge von der rotierenden Bremsscheibe in dem Betrag ihrer freien Beweglichkeit mitgenommen und gleichzeitig um einen vorgegebenen Wert um die Schwenkachse der Lageranordnung bewegt. Dieser Bewegungsablauf führt zu einer Verlagerung des Kraftangriffs-Schwerpunktes der Bremsbacken gegenüber der Bremsscheibe nach radial außen. Da die mit den Bremsbelägen an den Bremsbacken zusammenwirkenden Stirnflächen der Bremsscheibe eine vorgegebene Neigung zur Bremsscheibenachse haben, resultiert diese Bewegung der Bremsbacken in einem erhöhten Andruck der Bremsbeläge, was eine entsprechend vergrößerte Bremswirkung bedeutet.

Die erfindungsgemäße Scheibenbremse ist für den Einbau in ein- oder mehrspurige Fahrzeuge besonders geeignet, da ihr konstruktiver Aufwand und ihre Abmessungen denjenigen herkömmlicher Fahrzeug-Scheibenbremsen weitgehend entspricht und demzufolge keine Probleme hinsichtlich der Positionierung in den Fahrzeugen bestehen und auch der Einbau in üblicher Weise erfolgen kann. Besonders zweckmäßig kann die erfindungsgemäße Scheibenbremse als sog. Feststell- bzw. Auflaufbremse in verschiedenartigsten Anhängern eingesetzt werden, da die Selbstverstärkung bereits bei geringsten Drehbewegungen der Räder mit deren Bremsscheiben auch bei anfänglich nur geringem Andruck der Bremsbeläge eintritt und sich zunehmend vergrößert.

Der erfindungsgemäß erzielbare Selbstverstärkungseffekt kann so gewählt werden, daß die auf die Bremsbacken rein axial wirkenden Andruckkräfte im Vergleich zu den Andruckkräften bei herkömmlichen Scheibenbremsen drastisch gesenkt werden können. Damit ergibt sich die Möglichkeit, auf die bisher im Fahrzeugbau als unbedingt notwendig angesehenen hydraulischen Krafterzeuger zu verzichten und diese durch einfachere und kostengünstigere mechanische bzw. elektromagnetische Betätigungssysteme zu ersetzen. Daneben können bei Beibehaltung der hydraulischen Krafterzeuger die Abmessungen der verschiedenen Aggregate verringert und/oder die hydraulischen Drücke gesenkt werden, was sich in beiden Fällen günstig auf die Herstellungskosten und die Betriebssicherheit auswirkt. Da die zur Erzeugung der Abbremsung erforderlichen Betätigungskräfte gegenüber den entsprechenden Betätigungskräften herkömmlicher Bremssysteme relativ klein sind, kann auf fluidische Übertragungsmedien, d.h. Hydraulik und Pneumatik, mit allen dazugehörigen Nebenaggregaten verzichtet werden. Statt dessen besteht die Möglichkeit, zur Krafterzeugung an den Bremssätteln elektrische Stellmotore oder Elektromagnete vorzusehen, die direkt oder indirekt auf die Bremsbacken einwirken. Bei einer derartigen Verwendung von elektrischen Betätigungs- und Übertragungseinrichtungen in Fahrzeugkombinationen (Zugfahrzeug mit Anhänger), bei denen auflaufbetätigte Bremssysteme vorgeschrieben sind, können bei Verwirklichung der erfindungsgemäßen Scheibenbremse sog. "durchgehende" Bremsanlagen konzipiert werden, wie sie auch bei größeren Fahrzeugkombinationen vorgeschrieben sind.

Bei der erfindungsgemäßen Scheibenbremse sind die beiden seitlich neben der Bremsscheibe befindlichen Bremsbacken "schwimmend" gelagert und können sich in tangentialer Richtung zur Bremsscheibe in vorgegebenen Grenzen bewegen. Diese Bewegungen erfolgen beim Einleiten des Bremsvorganges durch einen Mitnahmeeffekt der Bremsbacke durch die drehende Bremsscheibe, wobei die Größe dieser Bewegung durch Zusammenwirken eines Haltebolzens der jeweiligen Bremsbacke in einer Halteöffnung von größerem Durchmesser begrenzt wird.

Die erfindungsgemäße Scheibenbremse hat gegenüber bekannten Ausführungen den besonderen Vorteil, daß auch über längere Betriebszeiten durch relativ kleine Betätigungskräfte hohe Bremskräfte bzw. Bremswirkungen erzielt werden. Da die vergrößerten Bremskräfte vorzugsweise in Scheibendrehrichtung wirken, können die achsparallel ausgerichteten, durch die hydraulischen oder pneumatischen Baueinheiten erzeugten Andruckkräfte verringert werden, was eine leichtere Bauweise der Bremssättel ermöglicht. Ein weiterer Vorteil liegt in der Verwendung der erfindungsgemäßen Scheibenbremsen in Verbindung mit gebräuchlichen mechanischen Auflaufeinrichtungen von Anhängern, wodurch sich eine gute Abstimmung des Gesamtbremsverhaltens von Zugfahrzeug und Anhänger ergibt, da beide mit Scheibenbremsen ausgerüstet werden können. Während bei herkömmlichen Bremsanlagen von Zugfahrzeugen mit Anhängern verschiedene Medien zur Steuerung und Betätigung der einzelnen Aggregate notwendig waren, was einen erheblichen technischen Aufwand erforderte, erlaubt die Anwendung des erfindungsgemäßen Scheibenbremsen-Prinzips bei komplexen Fahrzeugsystemen, wie z.B. Zugfahrzeuge mit angekoppelten Anhängern, eine Einsparung diverser Aggregate und Baugruppen, was sich in einer Verringerung der Herstellungskosten bei Erhalt zumindest gleicher Betriebssicherheit auswirkt. Darüber hinaus werden erstmals sog. durchgehende Bremsanlagen auch bei einfachen Fahrzeugkombinationen möglich, die bisher nur mit nichtdurchgehenden mechanischen Auflauf-Bremsanlagen ausgestattet werden konnten.

Für Nutzfahrzeuggespanne sind sog. durchgehende Bremsanlagen gesetzlich vorgeschrieben, bei denen die Ansteuerung und Betätigung der Bremsen über das Zugfahrzeug mittels Leitungen an den Anhänger weitergegeben werden und die Bremsen des Anhängers synchron mit den Bremsen im Zugfahrzeug arbeiten. Bei leichteren Gespannen aus Zugfahrzeug und Anhänger ohne solche durchgehenden Bremsanlagen sind die Anhänger mit sog. Auflaufbremsen ausgerüstet. Bei Betätigung der Bremsen des Zugfahrzeuges übt der anfänglich noch ungebremste Anhänger über seine Deichsel eine Schubkraft auf das Zugfahrzeug aus. Diese Schubkraft wird in den o.g. Auflaufbremsanlagen zur Erzeugung der Betätigungskräfte für die Radbremsen des Anhängers ausgenutzt. Wenn ein derartiges Fahrzeug-Anhänger-Gespann aus dem Stillstand rückwärts fahren soll, mußte bisher der Fahrer aussteigen und an der Zugdeichsel des Anhängers eine mechanische Sperre einlegen, welche verhindert, daß die beim Rückwärtsfahren vom Zugfahrzeug auf den Anhänger ausgeübte Schubkraft ebenfalls zu einer Betätigung der Anhängerbremsen führt.

Neuere Fahrzeuge bzw. Gespanne müssen mit einer sog. Rückfahrautomatik ausgestattet sein, die beim Rückwärtsfahren die Radbremsen des Anhängers automatisch löst. Zu Beginn der Rückwärtsfahrt des Zugfahrzeuges wird die Zugdeichsel des Anhängers um vorgegebene Beträge zusammengeschoben, was eine begrenzte Zustellbewegung der Bremsbacken in Richtung der Bremsflächen z.B. mechanisch über Hebelgestänge bewirkt, ohne daß jedoch eine merkbare Bremswirkung erzeugt wird (vgl. DE-A 196 09 629).

Nach einem wesentlichen Aspekt der Erfindung wird eine Rückfahrautomatik auf technisch einfache Weise dadurch verwirklicht, daß die Bremsbacken über nur eine Lageranordnung an der in normaler Drehrichtung rückwärtigen Seite begrenzt frei beweglich gehalten sind. Tritt bei dieser Anlenkung der beweglichen Bremsbacke eine Umkehr der Drehrichtung des Rades und damit auch der Bremsscheibe auf, dann wird durch die Wirkung der Keilflächen die jeweilige Bremsbacke nach radial innen in Richtung auf die Drehachse der Bremsscheibe bewegt. Da sich die Wandstärke der Bremsscheibe bei einer bevorzugten Ausführung kontinuierlich nach radial innen verringert, entsteht ein entsprechend größerer Freiraum für die Bremsbacken. Da der von den hydraulischen Betätigungszylindern erzeugte Vorschubweg der Bremsbacken stets begrenzt ist, wird durch die radiale Einwärtsbewegung der Bremsbacken eine Stellung erreicht, in welcher die Bremsbeläge von den Wirkflächen der Bremsscheibe frei sind und demzufolge keine Bremswirkung mehr vorhanden ist. Damit ermöglicht die Ausrüstung eines Anhängers mit der einseitig aufgehängten Scheibenbremse gemäß der Erfindung eine automatische Freigabe der Anhängerbremsen bei Rückwärtsfahrt. Wenn dieses Fahrzeuggespann wieder vorwärts fährt, stellt sich beim nächstfolgenden Bremsvorgang selbsttätig die Normalstellung der Bremsbeläge wieder her und bei Betätigung des Bremspedals wirkt die Bremsanlage im Zugfahrzeug und auch im Hänger in der oben erläuterten Weise mit selbsttätiger Bremskraftverstärkung.

In den Unteransprüchen sind zweckmäßige Ausgestaltungen und Weiterbildungen der Erfindung angegeben.

Weitere Besonderheiten und Vorzüge der erfindungsgemäßen Scheibenbremse ergeben sich aus der folgenden Beschreibung von in der Zeichnung dargestellten Ausführungsbeispielen. Es zeigen:
- Fig. 1a, 1b: das Funktionsprinzip der erfindungsgemäßen Scheibenbremse in schematischer Darstellung;
- Fig. 2: das Funktionsprinzip einer erfindungsgemäßen Scheibenbremse mit einseitiger Aufhängung der Bremsbacke bei Rückwärtsfahrt zur Verwendung in vorgeschriebenen Bremsen mit Rückfahrtautomatik;
- Fig. 3a, 3b: einen schematischen Querschnitt eines Ausführungsbeispiels der erfindungsgemäßen Scheibenbremse im gelösten und im angezogenen Betriebszustand;
- Fig. 4, 5: weitere Ausführungsbeispiele der erfindungsgemäßen Scheibenbremse im schematischen Querschnitt.

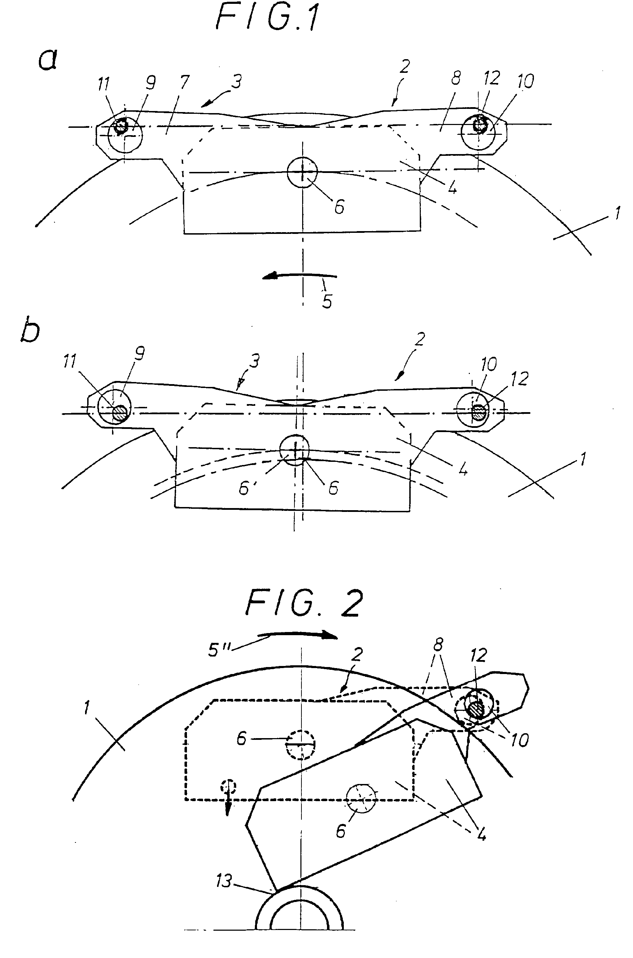

In Fig. 1a, 1b ist ein Teil einer Bremsscheibe 1 zusammen mit einer Bremsbacke 2 schematisch dargestellt, die aus einer besonders geformten Tragplatte 3 und dem daran befestigten - teilweise gestrichelt dargestellten - Bremsbelag 4 besteht. Die Drehrichtung der Bremsscheibe 1 ist durch den Pfeil 5 und der Schwerpunkt des Kraftangriffs des Bremsbelages 4 an der Stirnfläche der Bremsscheibe 1 durch einen Kreis 6 angegeben. Die Tragplatte 3 weist zwei in Drehrichtung der Bremsscheibe 1 nach vorn und hinten abstehende Laschen 7, 8 auf, in deren Endteil jeweils eine Bohrung 9, 10 ausgebildet ist. In jeder dieser Bohrungen ist ein Tragzapfen 11, 12 aufgenommen, der in dem - nicht dargestellten - Sattel befestigt ist. Wie dargestellt, sind die Durchmesser der Tragzapfen 11, 12 kleiner als die Durchmesser der Bohrungen 9, 10 in den Laschen 7, 8 der Tragplatte.

Bei dem in Fig. 1a dargestellten Betriebszustand ist die Bremsbacke 2 von der umlaufenden Bremsscheibe 1 abgerückt, d.h. die Scheibenbremse ist gelöst. Dies erfolgt durch Kräfte eingebauter Federn.

Zur Erzielung eines Bremsvorgangs werden die Bremsbacken 2 durch ihren - in Fig. 1 nicht dargestellten - Betätigungsmechanismus achsparallel zur Bremsscheibe 1 verschoben und mit ihrem Bremsbelag 4 gegen die jeweilige Stirnfläche der Bremsscheibe 1 angedrückt. Durch die bereits bei geringem Andruck erzeugte Reibung zwischen der wirksamen Stirnfläche der Bremsscheibe 1 und dem Bremsbelag 4 wird die Bremsbacke 2 in einer zur Bremsscheibe 1 parallelen Ebene aus der in Fig. 1a dargestellten Position in die Stellung nach Fig. 1b bewegt. Dabei führt die Bremsbacke 2 eine gewisse Schwenkbewegung um den in der Zeichnung rechten Tragzapfen 12 aus und gleichzeitig erfolgt eine gewisse translatorische Mitnahmebewegung der Bremsbacke 2, wobei die Größe dieser Bewegungen durch die Durchmesserunterschiede der Tragbolzen 11, 12 gegenüber den Bohrungen 9, 10 begrenzt wird. Als Ergebnis dieser Bewegungsabläufe wird die Bremsbacke 2 gegenüber der Bremsscheibe 1 um einen gewissen Betrag nach radial auswärts bewegt, so daß sich ihr Schwerpunkt 6' seitlich in Drehrichtung und auch nach radial außen verlagert, was in Fig. 1b durch die gestrichelt gezeichnete Umfangslinie angedeutet ist. Wesentlich dabei ist, daß diese Verlagerung der Bremsbacke 2 gegenüber der Bremsscheibe 1 nach radial außen auch bei sehr hohen achsparallelen Andruckkräften der Bremsbacke entsprechend verstärkt wirksam ist.

Durch die "schwimmende" Lagerung der Bremsbacke 2 mittels der beiden endseitigen Laschen 7, 8 ihrer Tragplatte 3 an den beiden ortsfesten Tragzapfen 11, 12 ergeben sich die gleichen vorstehend beschriebenen Effekte bei einer Drehrichtungs-Umkehr der Bremsscheibe 1, d.h. die selbsttätige Bremskraftverstärkung wird auch bei Rückwärts-Fahrt erzielt.

Die in Fig. 2 dargestellte Scheibenbremse entspricht im wesentlichen der Ausführung nach Fig. 1, wobei funktionsgleiche Bauteile mit den gleichen Bezugszeichen wie in Fig. 1 bezeichnet sind. Während bei der Ausführung nach Fig. 1 die Bremsbacken 2 bzw. die Bremsbeläge 4 mit ihrer jeweiligen Tragplatte 3 über deren beidendige Laschen 7 und 8 an zwei Lageranordnungen 9, 11 und 10, 12 begrenzt frei beweglich angehängt sind und dadurch ein Selbstverstärkungseffekt in beiden Drehrichtungen erzeugt wird, sind die Bremsbacken 2 der Scheibenbremse einseitig an nur einer Lageranordnung begrenzt frei beweglich am Sattel oder einem anderen geeigneten stationären Bauteil angelenkt. Dementsprechend hat die Tragplatte 3 des Bremsbelags 4 nur eine Lasche 8, die sich seitlich entgegengesetzt zur Vorwärts-Drehrichtung, d.h. in Fig. 2 nach rechts, erstreckt und an ihrem Endteil die aus größerer Bohrung 10 und schmalerem Tragzapfen 12 gebildete Lageranordnung aufweist.

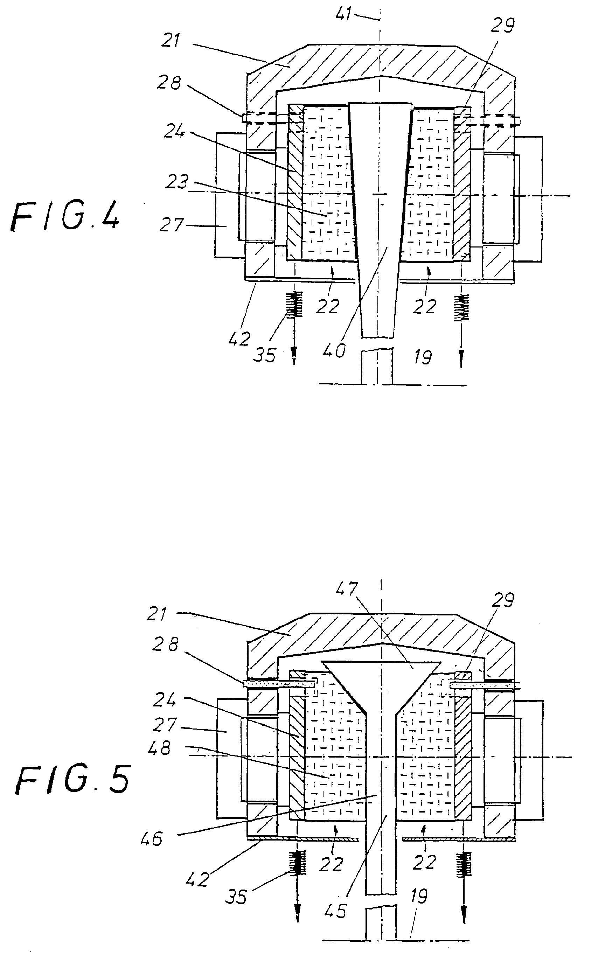

Bei Vorwärtsfahrt funktioniert diese Bremsenausführung wie diejenige nach Fig. 1, d.h. die Bremsbacke 2 führt bei Betätigung der Bremse eine in bezug auf die Bremsscheibe 1 nach radial auswärts gerichtete Bewegung aus, die dann durch die konische Querschnittsform, z.B. gemäß Fig. 4, der Bremsscheibe zu dem angestrebten Selbstverstärkungseffekt führt.

Wenn sich bei einer Rückwärtsfahrt die Drehrichtung der Bremsscheibe 1 entsprechend dem Pfeil 5" umkehrt, ist die Bremsscheibe 1 durch den Reibungsschluß mit den anliegenden Bremsbelägen 4 bestrebt, die Bremsbacken 2 mitzunehmen. Da auch hier der radiale Abstand der Lageranordnung 10, 12 zur Drehachse der Bremsscheibe 1 größer ist als der radiale Abstand des Kraftangriffs-Zentrums 6 zur Bremsscheibenachse, werden die Bremsbacken 2 in ihrer Lageranordnung 10, 12 aus der gestrichelt dargestellten Normallage nach radial innen in die in Vollinien dargestellte Position verschwenkt. Bei Einsatz der in Fig. 4 dargestellten Bremsscheibe, deren Wandstärke nach radial innen gleichmäßig abnimmt, kommen die Bremsbeläge 4 durch diese nach radial innen gerichtete Bewegung der Bremsbacken von den Wirkflächen der Bremsscheibe frei, was bedeutet, daß die Bremse bereits bei Beginn einer Rückwärtsfahrt automatisch gelöst wird. Die radiale Einwärtsbewegung der Bremsbacken wird durch Anschläge begrenzt, von denen einer bei 13 beispielhaft dargestellt ist. In der dargestellten gelösten Stellung sind die Radbrems-Zylinder 27 (vgl. Fig. 2) unwirksam, da deren Kolbenweg in herkömmlicher Weise durch Endanschläge begrenzt ist. Die in Fig. 2 dargestellte Scheibenbremse hat damit eine Rückfahrautomatik, wie sie für bestimmte Anhängertypen verlangt wird, und zwar ohne zusätzliche Konstruktionselemente. Bei dieser Bremsenausführung kann das freie Spiel in der Lageranordnung 10, 12, d.h. die Differenz der Durchmesser zwischen dem Tragzapfen 12 und der Bohrung 10, minimiert sein.

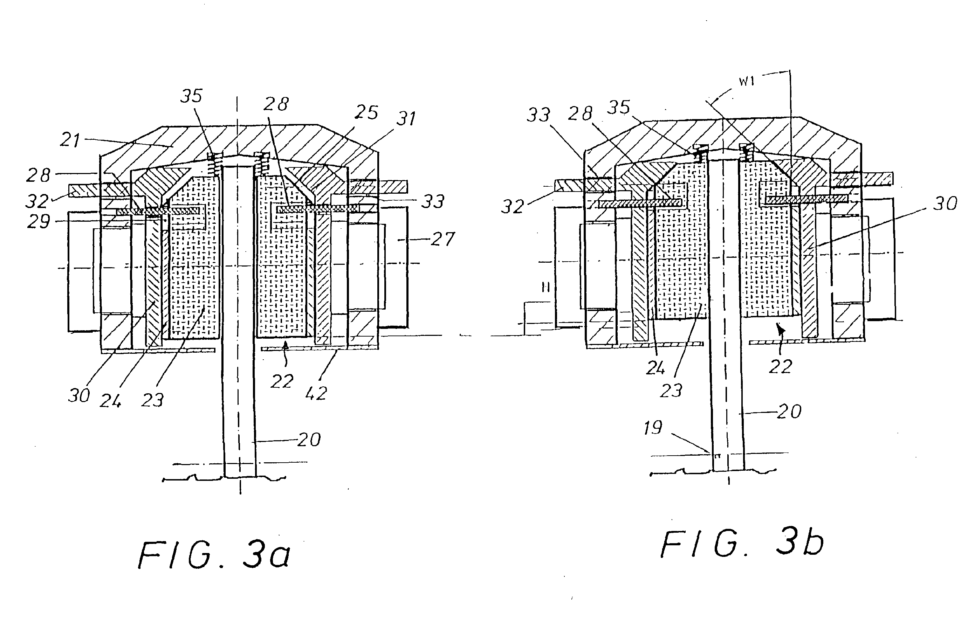

Bei der in Fig. 3a, 3b schematisch im Querschnitt dargestellten Scheibenbremse ist das vorstehend anhand der Fig. 1 und 2 beschriebene Funktionsprinzip verwirklicht. Die Bremsscheibe 20 hat planparallele Stirnseiten, d.h. eine gleichbleibende Dicke. In einem den radial äußeren Teil der Bremsscheibe 20 umgebenden U-förmigen Sattel 21 sind beidseitig je eine Bremsbacke 22, bestehend aus einem Bremsbelag 23 und der entsprechend Fig. 1 ausgebildeten Tragplatte 24, angeordnet, wobei jeder Bremsbelag 23 in seinem oberen Bereich einen konischen Teil 25 mit schrägen Außenflächen aufweist. Als Betätigungsmechanismen für die achsparallelen Andruckbewegungen der Bremsbacken 22 gegen die Stirnflächen der Bremsscheibe 20 dienen bei diesem Ausführungsbeispiel herkömmliche Hydraulikzylinder 27, die beide in je einem Schenkel des Sattels 21 angeordnet sind. Ferner ist in jedem Schenkel des Sattels 21 ein Tragzapfen 28 befestigt, die den in Fig. 1, 2 dargestellten Tragzapfen 11, 12 entsprechen und sich auch in der dort gezeigten seitlichen Position befinden, was durch die Kreuzschraffur dieser Tragzapfen 28 angedeutet ist. Die inneren Endteile dieser Tragzapfen 28 durchragen Bohrungen 29 in den Tragplatten 24, die entsprechend Fig. 1 und 2 einen größeren Durchmesser als die Tragzapfen 28 haben und eine begrenzte freie Beweglichkeit der beiden Bremsbacken 22 gegenüber dem Sattel 21 zulassen. Statt der Hydraulikzylinder 27 kann auch ein mechanischer, elektromagnetischer oder pneumatischer Betätigungsmechanismus vorgesehen sein.

Bei diesem Ausführungsbeispiel ist zwischen jeder Tragplatte 24 der beiden Bremsbacken 22 und dem Andruckglied des hydraulischen Betätigungszylinders 27 je eine besonders geformte Andruckplatte 30 angeordnet, die in ihrem oberen Bereich nach innen weisende Schrägflächen 31 aufweist, die der Außenfläche des konischen Bremsbacken-Teils 25 gegenübersteht und die gleiche Neigung hat. Jede Andruckplatte 30 weist ferner einen nach außen abstehenden Führungszapfen 32 im oberen Plattenbereich auf, der in einer Bohrung 33 in dem zugeordneten Sattelschenkel geführt ist, so daß die Tragplatte 24 bei Aktivierung des Hydraulikzylinders 27 achsparallele Bewegungen ausführen kann und die Druckkräfte auf die jeweils zugehörige Bremsbacke 22 überträgt. Ferner sind in dem oberen Verbindungssteg des Sattels 21 je eine Druckfeder 35 angeordnet, die auf die zugehörige Bremsbacke 22 einen nach radial innen gerichteten Druck ausüben und die Bremsbacken 22 in der in Fig. 3a dargestellten gelösten Normalposition halten bzw. diese Bremsbacken nach dem Lösen in die Normalposition bringen.

Bei Betätigung der Hydraulikzylinder 27 kommt das vorstehend anhand der Fig. 1a, 1b bzw. 2 erörterte Funktionsprinzip zur Wirkung und die beiden Bremsbakken 22 verlagern sich aus der Stellung nach Fig. 3a in bezug auf die Bremsscheibe 20 um den Betrag H nach radial auswärts in die Position nach Fig. 3b. Dabei gelangen die Außenflächen der konischen Endteile 25 der Bremsbacken 22 mit den unter dem gleichen Winkel W1 geneigten Innenflächen 31 der beiden Andruckplatten 30 in Druckkontakt und durch die auf diese Weise erzielte Keilwirkung ergibt sich ein achsparallel zur Drehachse 36 der Bremsscheibe 20 wirkender Andruck der beiden Bremsbeläge gegen die wirksamen Stirnflächen der Bremsscheibe 20, so daß sich der angestrebte Selbstverstärkungs-Effekt einstellt.

Die in Fig. 4 schematisch im Querschnitt dargestellte Scheibenbremse entspricht im wesentlichen der Ausführung nach Fig. 3, wobei die mit dieser Ausführung nach Fig. 3 gleichartigen Bauteile mit den gleichen Bezugszeichen versehen sind. Der technisch wesentliche Unterschied dieser Scheibenbremse gegenüber der Ausführung nach Fig. 3 besteht darin, daß die Bremsscheibe zumindest in ihrem wirksamen radialen Außenteil durchgehend konisch mit nach radial innen abnehmender Wandstärke ausgebildet ist, wobei die beiden Stirnflächen unter einem relativ geringen Winkel zur Mittelebene 41 dieser Bremsscheibe 40 geneigt sind. Die beiden Bremsbacken 22 haben eine entsprechend geneigte durchgehend plane Anlagefläche. Durch die konische Ausbildung der Bremsscheibe 40 kann auf die bei der Ausführung nach Fig. 3 vorgesehenen speziellen Andruckplatten 30 verzichtet werden, so daß die Druckglieder der Hydraulikzylinder 27 direkt auf die Tragplatten 24 der beiden Bremsbacken 22 einwirken. Die Lagerung bzw. Aufhängung der beiden Bremsbacken 22 erfolgt mittels der in Fig. 1a, 1b und 2 dargestellten Tragzapfen 28 und ihren beiden oder einer Tragplatten-Lasche, die in den Schenkeln des Sattels 21 befestigt sind. Aufgrund der in Grenzen frei beweglichen und verschwenkbaren Lagerung der beiden Bremsbacken 22 an den zugehörigen Tragzapfen 28 wird auch bei dieser Ausführung bei Erzeugung des axialen Andruckes der Bremsbeläge 23 an die entsprechend schrägen Stirnflächen der Bremsscheibe 40 die radiale Versatzbewegung der Bremsbacken nach radial außen erzielt, was aufgrund der gegensinnigen Schrägflächen-Paarungen zu einer Keilwirkung und damit zu einem verstärkten Andruck führt. Um nach Beendigung eines Bremsvorganges die Bremsbacken gezielt in ihre gelöste, in Fig. 1a dargestellte Ausgangsposition zurückzuführen, sind die Federn 35 vorgesehen, die hier als Zugfedern ausgebildet sind. Als zusätzliche Sicherung für die durch die Federn 35 ausgelösten Bewegungen dient eine an den unteren Enden der beiden Sattel-Schenkel befestigte Anschlagplatte 42, die auch bei der Ausführung nach Fig. 3 vorgesehen ist.

Die Scheibenbremse nach Fig. 5 entspricht weitestgehend der Ausführung nach Fig. 4, wobei hier die Bremsscheibe 45 einen planparallelen radial inneren Abschnitt 46 und einen konischen Abschnitt 47 an ihrem äußeren Umfangsbereich aufweist. Die Bremsbeläge 23 der Bremsbacken 22 sind entsprechend geformt, d.h. haben jeweils einen radial inneren Abschnitt 48 mit zur planen Fläche der Bremsscheibe parallel verlaufender Bremsfläche sowie einen radial äußeren Abschnitt 49 mit einer zur zugeordneten Konusfläche der Bremsscheibe 45 parallelen Wirkfläche. Bei dieser Ausführung ergibt sich durch eine Versatzbewegung der beiden Bremsbacken nach radial auswärts gemäß Fig. 1a, 1b ein vergrößerter Andruck der beiden Bremsbeläge gegen die Teilflächen der Bremsscheibe und damit in ähnlicher Weise wie bei den vorangegangenen Ausführungsbeispielen ein Selbstverstärkungseffekt.

Die Erfindung ist nicht auf die vorstehend beschriebenen Ausführungsbeispiele beschränkt, sondern umfaßt auch andere Kombinationen von Einzelmerkmalen der dargestellten Scheibenbremsen. Wenn eine Bremswirkung mit Selbstverstärkungs-Effekt nur in einer Drehrichtung der Bremsscheibe verlangt ist, kann nur eine - die in Drehrichtung hintere - Lageranordnung eingesetzt werden. Ferner kann bei geeigneter Formgebung der Bremsbeläge auch eine einzige Lageranordnung in Form einer Pendel-Aufhängung der beiden Bremsbacken vorgesehen werden. Schließlich kann in bestimmten Varianten auch die durch die dünneren Tragzapfen und die größeren Lagerbohrungen begrenzte freie Beweglichkeit der Bremsbacken im ortsfesten Sattel mittels anderer technischer Maßnahmen, wie z.B. Doppelexzenter od. dgl. erreicht werden.

## Patentansprüche

1. Teilbelag-Scheibenbremse mit Selbstverstärkung der Bremskraft, bestehend aus
- einer drehbaren Bremsscheibe (1; 20; 40, 45),
- einem U-förmigen ortsfesten Sattel (21), der die Bremsscheibe außen umgreift,
- im Sattel angeordneten Bremsbacken (2; 22), deren mit einem Bremsbelag (4; 23) verbundene Tragplatten (3; 24) in einer Lageranordnung (9, 11; 10, 12; 28, 29) schwenkbar gelagert sind, und
- an den Schenkeln des Sattels (21) angeordnete Betätigungseinrichtungen (27) zum synchronen Verschieben und Andrücken der Bremsbacken an die Stirnflächen der Bremsscheibe,
- wobei in der Vorschubbahn der Bremsbacken (2; 22) Schrägflächen zur selbsttätigen Verstärkung des Andruckes der Bremsbacken an die Bremsscheibe vorgesehen sind,
**dadurch gekennzeichnet , daß**
- der radiale Abstand der Lageranordnung zur Bremsscheibenachse (19) größer als der radiale Abstand der Kraftangriffs-Schwerpunkte (6) der Bremsbacken (2; 22) zur Bremsscheibenachse (19) ist, so daß die begrenzt frei beweglichen Bremsbacken (2; 22) bei ihrem Andruck an die Bremsscheibe (1; 20; 40, 45) eine zum Bremsscheibenumfang hin gerichtete Bewegung ausführen, und
- die in der Vorschubbahn der Bremsbacken (2; 22) vorgesehenen Schrägflächen radial verlaufen und die zum Bremsscheibenumfang hin gerichteten Kräfte durch Keilwirkung in zusätzliche Andruckkräfte umsetzen.

2. Scheibenbremse nach Anspruch 1,
**dadurch gekennzeichnet, daß** zwischen den Bremsbacken (2; 22) und den Schenkeln des Sattels (1) Keilplatten (30) mit innenseitigen Schrägflächen (31) angeordnet sind, die mit außenseitigen Schrägflächen (25) der Bremsbacken (22) korrespondieren.

3. Scheibenbremse nach Anspruch 2,
**dadurch gekennzeichnet, daß** die Keilplatten (30) über Zapfen (32) in den Schenkeln des Sattels (21) quer verschiebbar gehalten sind.

4. Scheibenbremse nach Anspruch 1,
**dadurch gekennzeichnet, daß** die Keilflächen an der Bremsscheibe (40; 45) und korrespondierend an der Innenseite der Bremsbeläge (4; 23) ausgebildet sind.

5. Scheibenbremse nach einem der Ansprüche 1 bis 4,
**dadurch gekennzeichnet, daß** die Bremsbacken (22) mit nach radial innen wirkenden Federn (35) vorgespannt sind.

6. Scheibenbremse nach einem der Ansprüche 1 bis 5,
**dadurch gekennzeichnet, daß** die Lageranordnung der Bremsbacken (2; 22) mindestens einen ortsfesten Tragzapfen (11, 12; 28) enthält, der in einer Bohrung (9, 10; 28) in der Tragplatte (3; 24) der Bremsbacke (2; 22) begrenzt frei beweglich aufgenommen ist.

7. Scheibenbremse nach einem der Ansprüche 1 bis 6,
**dadurch gekennzeichnet, daß** die Tragplatten (3; 24) der Bremsbacken (2; 22) in zwei endseitigen Lageranordnungen (9, 11 und 10, 12) gelagert sind.

8. Scheibenbremse nach einem der Ansprüche 1 bis 6,
**dadurch gekennzeichnet, daß** die Tragplatten (3; 24) der Bremsbacken (2; 22) in einer Lageranordnung (10, 12) gelagert sind, die sich an dem Endteil der jeweiligen Tragplatte befindet.
